# EUROPÄISCHE PATENTSCHRIFT

(11) **EP 1 280 743 B1**
(45) Veröffentlichungstag und Bekanntmachung des Hinweises auf die Patenterteilung: **24.03.2004**
(21) Anmeldenummer: 00981253.8
(22) Anmeldetag: 13.11.2000
(51) Int. Cl.: C04B 35/043, C04B 35/66

(54) **VERSATZ, VERWENDUNG UND VERFAHREN ZUR HERSTELLUNG KOHLENSTOFFHALTIGER FEUERFESTER FORMKÖRPER MIT VERBESSERTEM OXIDATIONSVERHALTEN**
BATCH COMPOSITION, USE AND METHOD FOR PRODUCING A CERBONACEOUS REFRACTORY SHAPED BODY WITH IMPROVED OXIDATION BEHAVIOR
COMPOSITION, UTILISATION ET PROCEDE DE FABRICATION D'UN CORPS MOULE REFRACTAIRE CONTENANT DU CARBONE AYANT UN COMPORTEMENT A L'OXYDATION AMELIORE

(30) Priorität: 15.11.1999 DE 19954893
(43) Veröffentlichungstag der Anmeldung: 05.02.2003
(73) Patentinhaber: Refratechnik Holding GmbH & Co. KG, 85737 Ismaning (DE)
(72) Erfinder: BARTHA, Dr. Peter, 37120 Bovenden (DE); JANSEN, Helge, 37133 Friedland (DE); GROSSE DALDRUP, Heinrich, 40667 Meerbusch-Büderich (DE)
(74) Vertreter: Solf, Alexander, Dr.
(86) Internationale Anmeldenummer: PCT/EP2000/011205
(87) Internationale Veröffentlichungsnummer: WO 2001/036346

(56) Entgegenhaltungen:
- DE-A- 4 312 396
- CHEMICAL ABSTRACTS, vol. 109, no. 20, 14. November 1988 (1988-11-14) Columbus, Ohio, US; abstract no. 175331e, XP000155215 & JP 63 151660 A (HARIMA REFRACTORIES CO LTD) 24. Juni 1988 (1988-06-24)

## Beschreibung

Die Erfindung betrifft einen feuerfesten Versatz zur Herstellung eines Formkörpers sowie ein Verfahren zu seiner Herstellung.

Zur Auskleidung metallurgischer Gefäße werden vorzugsweise phenolharz- oder pechgebundene Steine auf der Basis Magnesia und anderen Oxiden sowie Graphit eingesetzt. Bei Anwendungstemperaturen bis 1800°C sowie aggressiven, bewegten Schlacken werden an die Leistungsfähigkeit der Steine sehr hohe Ansprüche gestellt.

Der Verschleiß feuerfester Steine im Einsatz läßt sich grob in zwei unterschiedliche Mechanismen aufteilen: Zum einen, der Verschleiß durch chemische Reaktionen (Korrosion und Oxidation) und zum anderen der thermomechanische Verschleiß (Risse, Abplatzungen, Zermürbung der Steinsubstanz). Hinzu kommen Mischformen wie Abrasion und Erosion. Während die chemische Beständigkeit vor allem durch die Wahl der Rohstoffe beeinflusst werden kann (LC-Sinter, Schmelzmagnesia, Flockengraphit etc.), wird die thermomechanische Resistenz vor allem durch die Bindung bestimmt. MgO-C-Steine haben im Einsatz prinzipiell vier Möglichkeiten thermomechanische Belastungen auszugleichen: durch elastische Verformung, durch plastische Verformung, durch Mikrorisse oder durch Makrorisse des Steingefüges. Während die elastische Komponente der Verformung bei grobkeramischen Produkten naturgemäß gering ist, führen Makrcrisse zur Zerstörung und zum Verlust von Steinsubstanz.

Die Binder Phenolharz und Steinkohlenteerpech verkoken während der hohen Anwendungstemperaturen in den metallurgischen Gefäßen zu Kohlenstoff. Der Binder ist also nur Mittel zum Zweck. Allerdings wird die Natur des resultierenden Kohlenstoffes, der bei den Steinen unter den hohen Anwendungstemperaturen die Bindung übernimmt, durch den Binder bestimmt. Naturgemäß weist dabei die Phenolharzbindung gegenüber der Pechbindung den Nachteil auf, daß der beim Verkoken entstehende Kohlenstoff (Glaskohlenstoff) starr und spröde ist. Pechgebundene Steine weisen bei hohen Festigkeiten relativ niedrige elastische Moduli auf. Der wesentliche Unterschied besteht dabei in der Kristallinität des Kohlenstoffes, der beim Pech über die Bildung einer flüssigen sogenannten Mesophase abläuft. Entsprechende Strukturen werden aus dem Phenolharzes unter normalen Bedingungen erst bei Temperaturen oberhalb von 2500°C erzeugt. Im Gegensatz zum kristallinen Graphit weist die Glaskohlenstoffbindung praktisch keine Möglichkeit auf, Überspannungen anders als durch Makrorisse auszugleichen. Das Resultat in der Praxis ist eine höhere Empfindlichkeit gegenüber thermomechanischen Spannungen und schlagartigen mechanischen Belastungen. Außerdem reagiert der isotrope Glaskohlenstoff leichter mit Sauerstoff, ist also oxidationsempfindlicher. Dies kann im Einsatz zu einem schnelleren Verlust von Steinsubstanz führen.

Die auf Steinkohlenteerpech basierende Pechbindung weist allerdings den erheblichen Nachteil auf, dass beim Erhitzen des Peches sowie der Steine krebserregende Substanzen wie Benzo-apyren entstehen können und diese in aufwendigen thermischen Behandlungsverfahren unmittelbar nach der Herstellung aus dem Stein entfernt werden müssen. Die Pechbindung ist daher unter Gesichtspunkten der Arbeitshygiene und des Umweltschutzes unter Druck geraten. Die Verwendung von neuentwickelten alternativen petrostämmigen Pechen führt im allgemeinen zu einer Verringerung der Leistungsfähigkeit der Steine. Gefordert ist also eine Bindung mit optimalen Gebrauchseigenschaften, insbesondere einer hohen Flexibilität und Oxidationsstabilität des Bindekokses, in Verbindung mit umweltkompatiblen Emissionen während der Herstellung und Verwendung.

Aus "Chemical Abstracts", Vol. 109, No. 20, 14. November 1988, Abstract No. 175331e, ist es bekannt, zu harzbegundenen Magnesia-Carbonsteinen 3 - 20 Gew.-% metallisches Aluminium oder Aluminium-Legierungspulver und 0,5 - 7 Gew.-% Chromoxidpulver zuzusetzen. Hiermit soll die Oxidationsbeständigkeit/Korrosionsbeständigkeit verbessert werden.

Aus der DE 43 12 396 A1 ist es bekannt, zur Beschleunigung und Steuerung der Flüssigphasenpyrolyse von technischen Kohlenwasserstoffgemischen, insbesondere Bindepechen für feuerfeste Formkörper zur Erhöhung der Koksausbeute, beispielsweise Ferrocen, zuzugeben. Hierdurch kann die Koksausbeute katalytisch erhöht werden.

Der Erfindung liegt die Aufgabe zugrunde, einen feuerfesten Versatz und einen feuerfesten Formkörper zu schaffen, der thermoplastisch verformbar ist und zudem ein verbessertes Oxidationsverhalten aufweist, wobei die positiven Gebrauchseigenschaften der Phenolharzbindung mit den guten thermomechanischen Eigenschaften und der höheren Oxidationsstabilität der Steinkohlenteerpechbindung verbunden werden.

Die Aufgabe wird mit einem Versatz mit den Merkmalen des Anspruch 1, einem Formkörper mit den Merkmalen des Anspruch 31 und einem Verfahren mit den Merkmalen des Anspruch 33 gelöst.

Erfindungsgemäß werden die Aufgaben dadurch gelöst, daß die Graphitisierung des verkokenden Kunstharzes durch die Zugabe von Graphitisierungshilfsmitteln zum Bindeharz bereits bei Temperaturen <1000°C erreicht wird.

Die Erfindung wird beispielhaft auch anhand einer Zeichnung erläutert, es zeigen dabei:
- Fig.1: die Linien von Röntgendiffraktogrammen von verkoktem Resolharz, Pech und erfindungsgemäß mit einem Grafitisierungshilfsmittel versetztem Resolharz;
- Fig.2: Druckerweichen / Druckfließen (DE/DFL)- Kurven unter Argon;
- Fig.3: die Oxidationsbeständigkeit eines Formkörpers gemäß der Erfindung genüber bekannten Formkörpern.

Die erfindungsgemässen Graphitisierungshilfsmittel sind insbesondere leicht reduzierbare organische Verbindungen der Übergangselemente wie z.B. Metallocene, Metallbenzoate, -octoate und -naphtenate oder aktive, auch anorganische Verbindungen wie harzlösliche Metallsalze oder chemisch gefällte oder mikronisierte Metalloxide. Bevorzugte Metalle sind hierbei Cu, Cr, Fe, Ni oder Co. Denkbar sind jedoch auch metallische Graphitisierungshilfsmittel wie die vorgenannten Metalle und insbesondere Ni-Metall oder weitere Metalle wie Pt-Metall, Rh-Metall, Ge-Metall oder ähnliche oder weitere verwandte Metalle. Die als Grafitisierungshilfsmittel wirksamen Substanzen setzen die sonst üblichen Graphitisierungstemperaturen von 2500°C auf unter 1000°C herab und werden in Gehalten von 0.1 bis 10% Gew.-% bezogen auf das Harz zugegeben. Ein typischer Gehalt ist 1%.

Das Mittel wird beispielsweise in Lösungsmittel gelöst oder mikronisiert als Pulver oder Schlämmung zugegeben. Maßgeblich ist, dass die als Grafitisierungshilfsmittel wirksamen Elemente zum Beginn der Umwandlung des Kunstharzes zu Kohlenstoff (Verkokung) bei ca. 400 - 500 °C in molekularer Form zur Verfügung stehen. Das setzt eine feinste, idealerweise molekulare Dispersion des Wirkstoffes sowie eine Reduzierbarkeit unter den Bedingungen im MgO-C-Stein voraus. %. Unter 0.1 % ist die graphitisierende Wirkung nicht mehr meßbar. Das Mittel wird in Lösungsmittel gelöst oder mikronisiert als Pulver oder Schlämmung zugegeben.

Der Nachweis der Graphitisierung des Kunstharzes kann an reinen verkokten Kunstharzproben durch Röntgenbeugung erfolgen. Nichtgraphitisierter Kohlenstoff liefert lediglich einen diffusen, breiten Peak, während graphitisiertes Kunstharz das charakteristische Beugungsspektrum des Graphites zeigt. Der Nachweis des Graphitiesierungshilfsmittels in der Bindematrix des Steines erfolgt beispielsweise über ein EDX-Scanning der Bindematrix einer mikroskopischen Steinprobe auf das katalytisch wirksame Element (z.B. Fe, Ni oder Co).

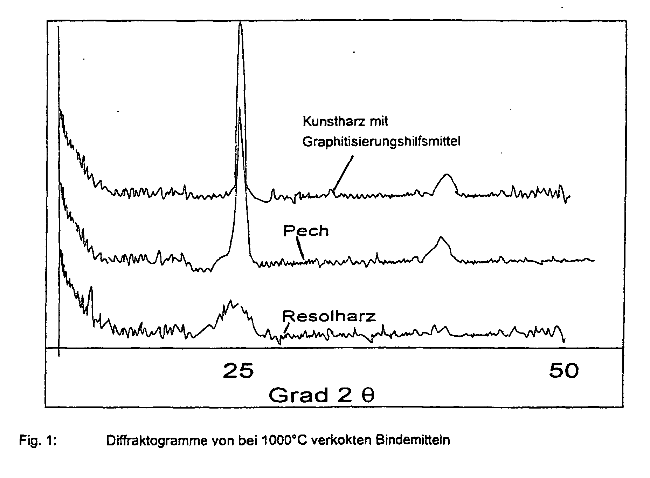

Die Fig.1 zeigt die Linien von Röntgendiffraktogrammen von verkoktem Resolharz, Pech und erfindungsgemäß mit einem Grafitisierungshilfsmittel versetztem Resolharz. Der scharfe Peak bei 25° zeigt, daß die katalytische Aktivierung zu kristallinen, graphitischen Strukturen führt. Das verkokte Resolharz zeigt lediglich einen sog. amorphen Hügel, der einen geringen Ordnungszustand anzeigt.

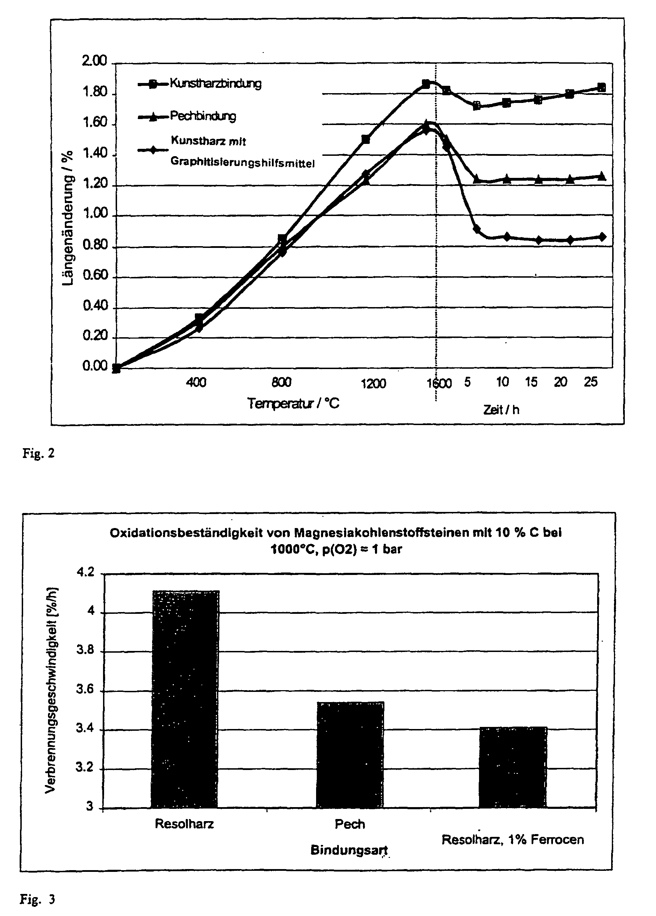

Die Fig. 2 zeigt Druckerweichen / Druckfließen (DE/DFL)- Kurven unter Argon. Bei der Untersuchung der DE wird der mit einem konstanten Druck belastetete Prüfkörper auf Prüftemperatur aufgeheizt und die Längenänderung gemessen. Im Allgemeinen wächst die Probe aufgrund der thermischen Dehnung. Je höher die thermische Dehnung, desto höher die Spannungen im Stein. Beim Druckfliessen werden Druck und Temperatur konstant gehalten und die Verformung in Abhängigkeit von der Zeit gemessen. Weist das Material eine Fließfähigkeit auf, so verformt es sich in entgegengesetzter Richtung zur Dehnung, jedoch ist auch ein weiteres Wachstum, z.B. aufgrund stattfindender Reaktionen und Phasenneubildungen, denkbar.

Die erfindungsgemäße Bindung mit einem graphitisierten verkokten Kunstharz wurde durch die Zugabe von 1 % Ferrocen, gelöst in Aceton zum Novolakharz erzeugt. Das Diagramm zeigt, daß die Erfindung nicht nur zu geringeren Dehnungen als die gewöhnliche Kunstharzbindung, sondern auch zu einem ausgeprägten Fließvermögen des Steines führt. Der Verlauf der Kurve läßt den Schluss zu, daß Spannungen durch die kleinere Dehnung nicht nur im geringeren Maße auftreten, sondern zusätzlich zerstörungsfrei abgebaut werden können. Die Modifikation führt also zu einem thermoplastischen Verhalten des feuerfesten Formkörpers, ohne daß die anderen Eigenschaften auf ein Niveau unterhalb des Niveaus von Steinen mit normaler Harzbindung abfallen.

Dies zeigt auch die folgende Tabelle mit einer Gegenüberstellung der Eigenschaften von Steinen mit und ohne mittels Graphitisierungshilfsmitteln graphitisierter Bindung (statistische Mittelwerte der Produktion von ca. 500 to Steinen).Hierbei wurden zwei Versätze gewählt und hieraus Steine gefertigt.

| | | |
|---|---|---|
| Versatz 1: 90 % Schmelzmagnesia 96, 10 % C | | |
| Versatz 2: 90 % Schmelzmagnesia 96, 10 % C, Zugabe von 1 % mikronisiertem Ferrocen-Pulver zum Versatz. | | |

| | **Versatz 1** | **Versatz 2** |
|---|---|---|
| FRD [g/cm³] | 3.06 | 3.06 |
| FRD n.V. [g/cm³] | 2.97 | 3.00 |
| E-Modul [GPa] | 48.81 | 56.88 |
| E-Modul n.V. [GPa] | 9.20 | 7.73 |
| offene Porosität [%] | 4.37 | 3.23 |
| offene Porosität n.V. [%] | 11.25 | 10.13 |
| KDF [MPa] | 51.60 | 58.30 |
| KDF n.V. [MPa] | 20.10 | 23.10 |
| KBF [MPa] | 13.18 | 15.15 |
| KBF n.V. [MPa] | 2.48 | 2.87 |
| d max [%] 1550°C | 1.88 | 1.58 |
| Fließvermögen nach 10 h [%] 1550°C | 0.31 | 0.45 |
| d max [%] 1300°C | 1.53 | 1.46 |
| Fließvermögen nach 10 h [%] 1300°C | 0.00 | 0.05 |
| Oxidationsbeständigkeit [s/mg] | 19.15 | 22.13 |
| n.V. = nach Verkokung | | |

Zu beachten sind vor allem die hohen Festigkeiten und niedrigen offenen Porositäten in Verbindung mit den niedrigen elastischen Moduli (E-Modul und G-Modul) nach Ausbildung des graphitischen Koksgerüstes bei 1000°C. Darüber hinaus wird durch das Ausbilden einer kristallinen, graphitischen Struktur des Kohlenstoffes die Oxidationsbeständigkeit, gemessen als Ausbrand pro Zeit unter einem definiertem Luftstrom bei 1000°C (Thermogravimetrie), erheblich verbessert, wie Fig. 3 zeigt.

Die Erfindung soll anhand zweier Beispiele weiter erläutert werden.

### 1. Formkörper mit Ferrocen als Graphitisierungshilfsmittel

Es wird zunächst eine mikronisierte MgO-Ferrocen-Zubereitung dadurch erzeugt, dass ein MgO-Sinter der Körnung 1 - 2mm und Ferrocenpulver im Verhältnis 50 : 1 in einer Kugelmühle gemeinsam vermahlen werden. Die Endkorngröße des Ferrocens ist nach dem Mahlen im Bereich von 1 - 10 µm und damit hochaktiv. Das Vermahlen erfolgt, um das Ferrocen aufzuschließen und eine für die Dosierung zum Versatz einfachere Handhabung zu ermöglichen.

Als weitere Rohmaterialien werden Schmelzmagnesia und Flockengraphit verwendet. Der Versatz besteht aus 34 % Schmelzmagnesia der Körnung 2 - 4 mm, 22 % Schmelzmagnesia der Körnung 1 - 2 mm, 20 % Schmelzmagnesia der Körnung 0 - 1 mm und 12,5 % MgO-Mehl. Hinzu kommen 10 % Flockengraphit sowie 1,5 % MgO-Ferrocen-Zubereitung. Der oben angegebene Versatz wird einem Zwangsmischer zugeführt und dort 3 Minuten trocken vorgemischt. Anschließend werden 3 % Phenolharz zugegeben und wiederum 10 Minuten gemischt. Der so hergestellte Pressenversatz wird auf einer hydraulischen Presse bei einem Maximaldruck von 160 MPa zu Formkörpern verpresst. Die Formkörper werden anschließend 6 Stunden bei 200°C getrocknet und sind anschließend einsatzbereit.

### 2. Formkörper mit Fe-Pigment als Graphitisierungshilfsmittel

In diesem Fall wird Fe-Pigment als Graphitisierungshilfsmittel verwendet, wobei die Zugabe des als Graphitisierungshilfsmittel wirkenden Fe-Pigments (rotes Hämatitpigment, Korngröße < 10 µm) als Schlicker mit einem Feststoffgehalt > 60 % direkt in das Harz erfolgt. Diese Pigmentsuspension wird mittels eines Rührers in das Harz eingerührt. Die Homogenisierung ist nach ca. 5 Minuten erreicht, was durch die Durchfärbung des Harzes erkennbar wird.

Als weitere Rohmaterialien werden wiederum Schmelzmagnesia und Flockengraphit verwendet, wobei ein Versatz hergestellt wird aus 34 % Schmelzmagnesia der Körnung 2 - 4 mm, 22 % Schmelzmagnesia der Körnung 1 - 2 mm, 20 % Schmelzmagnesia der Körnung 0 - 1 mm und 14 % MgO-Mehl. Hierzu werden 10 % Flockengraphit zugegeben. Diese Bestandteile werden im Zwangsmischer 3 Minuten trocken vorgemischt. Anschließend werden 3 % Phenolharz mit hiervon 1,5 % dispergierter Fe-Pigmentsuspension dem Mischer zugegeben, worauf das gesamte Gemenge noch einmal 10 Minuten naß gemischt wird.

Auch dieser nun fertig gemischte Pressenversatz wird auf hydraulischen Pressen mit einem Maximaldruck von 160 MPa zu Formkörpern verpresst, wobei diese Formkörper nach dem Verpressen 6 Stunden bei 200°C getrocknet werden und danach einsatzbereit sind.

Selbstverständlich kann auch das Ferrocen als Suspension und Fe-Pigment als MgO-Fe-Pigmentzubereitung verarbeitet werden. Alle weiteren genannten und möglichen Graphitisierungshilfsmittel sind ebenfalls zumindest auf die beiden beschriebenen Arten verarbeitbar. Zudem können sie als Suspension bzw. Emulsion in den verschiedensten Lösungsmitteln dem Harz oder der Gesamtmischung oder anderen Einzelbestandteilen der Mischung zugegeben werden

Bei dem erfindungsgemäßen kohlenstoffhaltigen feuerfesten Versatz und Formkörper ist von Vorteil, dass unter Vermeidung der Umweltprobleme mit Pech in dem Versatz bzw. Formkörper eine Bindung erzielt wird, welche eine hohe Flexibilität und Oxidationsstabilität des Bindekokses ermöglicht, wobei in vorteilhafter Weise die Graphitisierungstemperatur von über 2000° zudem deutlich unter 1000° C gesenkt wird.

## Patentansprüche

1. Versatz, insbesondere zum Herstellen eines feuerfesten Formkörpers, umfassend zumindest eine feuerfeste metalloxidische Komponente, sowie zumindest einen Kohlenstoffträger sowie eine Kunstharzkomponente als Binder und ein Graphitisierungshilfsmittel zur Erzielung von kristallinem Graphitkohlenstoff aus dem Harz, wobei das Graphitisierungshilfsmittel aus der Gruppe der reduzierbaren organischen Verbindungen der Übergangselemente und/oder der Gruppe der aktiven organischen oder anorganischen Metallverbindungen oder Metalle, wie harzlösliche Metallsalze, chemisch gefällte oder mikronisierte Metalloxide oder Metalle stammt, wobei das Graphitisierungshilfsmittel im Zeit- und/oder Temperaturintervall der Umwandlung des Kunstharzes zu Kohlenstoff (Verkokung) in molekularer Form zur Verfügung steht.

2. Versatz nach Anspruch 1,
**dadurch gekennzeichnet, daß**
das Graphitisierungshilfmittel als leicht reduzierbare organische Verbindungen der Übergangselemente Metallocene und/oder Metallbenzoate und/oder Metalloctoate und/oder Metallnaphtenate und/oder weitere organische Metallverbindungen enthält.

3. Versatz nach Anspruch 1 und/oder 2,
**dadurch gekennzeichnet, daß**
die organischen Verbindungen Verbindungen der Metalle Kupfer und/oder Chrom und/oder Eisen und/oder Nickel und/oder Kobalt und/oder Platin und/oder Rhodium und/oder Germanium und/oder weiterer ähnlicher Metalle sind.

4. Versatz nach einem oder mehreren der vorhergehenden Ansprüche,
**dadurch gekennzeichnet, daß**
als Graphitisierungshilfsmittel Ferrocen enthalten ist.

5. Versatz nach einem oder mehreren der vorhergehenden Ansprüche,
**dadurch gekennzeichnet, daß**
das Graphitisierungshilfsmittel anorganische Metallverbindungen, wie harzlösliche Metallsalze oder chemisch gefällte oder mikronisierte Metalloxide oder Metalle enthält.

6. Versatz nach einem oder mehreren der vorhergehenden Ansprüche,
**dadurch gekennzeichnet, daß**
das Graphitisierungshilfsmittel als anorganische Metallverbindungen Verbindungen des Kupfer und/oder Chrom und/oder Eisen und/oder Nickel und/oder Kobalt und/oder Platin und/oder Rhodium und/oder Germanium und/oder ähnlicher Metalle oder diese Metalle in metallischer Form enthält.

7. Versatz nach einem oder mehreren der vorhergehenden Ansprüche,
**dadurch gekennzeichnet, daß**
das Graphitisierungshilfsmittel rotes Hermatitpigment enthält.

8. Versatz nach einem oder mehreren der vorhergehenden Ansprüche,
**dadurch gekennzeichnet, daß**
die feuerfeste metalloxidische Komponente im wesentlichen MgO aufweist.

9. Versatz nach Anspruch 8,
**dadurch gekennzeichnet, daß**
die feuerfeste metalloxidische Komponente ein hochreiner natürlicher oder synthetischer MgO-Sinter ist.

10. Versatz nach einem oder mehreren der Ansprüche 1 bis 7,
**dadurch gekennzeichnet, daß**
die feuerfeste metalloxidische Komponente im wesentlichen Dolomit aufweist.

11. Versatz nach Anspruch 10,
**dadurch gekennzeichnet, daß**
die feuerfeste metalloxidische Komponente ein natürlicher oder synthetischer Dolomit-Sinter ist.

12. Versatz nach einem oder mehreren der Ansprüche 1 bis 7,
**dadurch gekennzeichnet, daß**
die feuerfeste metalloxidische Komponente Al₂O₃ ist.

13. Versatz nach Anspruch 12,
**dadurch gekennzeichnet, daß**
die feuerfeste metalloxidische Komponente Tabular-Tonerde ist.

14. Versatz nach einem oder mehreren der vorhergehenden Ansprüche,
**dadurch gekennzeichnet, daß**
die Kunstharzkomponente ein Einkomponentenkunstharz aufweist.

15. Versatz nach einem der Ansprüche 1 bis 14,
**dadurch gekennzeichnet, daß**
die Kunstharzkomponente ein Zweikomponentenkunstharz aufweist.

16. Versatz nach einem der Ansprüche 1 bis 15,
**dadurch gekennzeichnet, daß**
der Versatz Antioxidantien enthält.

17. Versatz nach Anspruch 16,
**dadurch gekennzeichnet, daß**
die Antioxidantien metallische Antioxidantien sind.

18. Versatz nach Anspruch 16 oder 17,
**dadurch gekennzeichnet, daß**
die metallischen Antioxidantien Silicium und/oder Aluminium und/oder Magnesium sind.

19. Versatz nach einem oder mehreren der vorhergehenden Ansprüche,
**dadurch gekennzeichnet, daß**
die feuerfeste metalloxidische Komponente eine Körnung von 0 bis 10 mm aufweist.

20. Versatz nach einem oder mehreren der vorhergehenden Ansprüche,
**dadurch gekennzeichnet, daß**
die feuerfeste metalloxidische Komponente eine Kornverteilung von 0 bis 15 mm aufweist.

21. Versatz nach einem oder mehreren der vorhergehenden Ansprüche,
**dadurch gekennzeichnet, daß**
der Gehalt der feuerfesten metalloxidischen Komponente im Versatz zwischen 70 M-% und 98 M-% liegt.

22. Versatz nach einem oder mehreren der vorhergehenden Ansprüche,
**dadurch gekennzeichnet, daß**
die Binderkomponente ein Phenolharz und/oder Resolharz und/oder ein Novolakharz ist.

23. Versatz nach einem oder mehreren der vorhergehenden Ansprüche,
**dadurch gekennzeichnet, daß**
das Kunstharz in einer Menge von 1 bis 5 M-% enthalten ist.

24. Versatz nach einem oder mehreren der vorhergehenden Ansprüche,
**dadurch gekennzeichnet, daß**
der Kohlenstoffträger in einer Menge von 0,5 M-% bis 30 M-% enthalten ist.

25. Versatz nach einem oder mehreren der vorhergehenden Ansprüche,
**dadurch gekennzeichnet, daß**
die metallischen Antioxidantien in einer Menge von 0,5 % bis 10 % enthalten sind.

26. Versatz nach einem oder mehreren der vorhergehenden Ansprüche,
**dadurch gekennzeichnet, daß**
das Graphitisierungshilfsmittel in Gehalten von 0,1 bis 10 Gew.-% bezogen auf das Harz enthalten ist.

27. Versatz nach Anspruch 26,
**dadurch gekennzeichnet, daß**
das Graphitisierungshilfsmittel in Gehalten von 0,5 bis 5 Gew.-% bezogen auf das Harz enthalten ist.

28. Versatz nach Anspruch 26 und/oder 27,
**dadurch gekennzeichnet, daß**
das Graphitisierungshilfsmittel in Gehalten von 0,7 bis 1,4 Gew.-% bezogen auf das Harz enthalten ist.

29. Versatz nach einem oder mehreren der vorhergehenden Ansprüche,
**dadurch gekennzeichnet, daß**
Fasern enthalten sind.

30. Versatz nach Anspruch 29,
**dadurch gekennzeichnet, daß**
Stahlfasern enthalten sind.

31. Verwendung eines Versatzes nach einem oder mehreren der Ansprüche 1 bis 30 zur Herstellung von Formkörpern.

32. Verwendung eines Versatzes nach einem oder mehreren der Ansprüche 1 bis 30 als Spritz- und/oder Stampf- und/oder Ramm- und/oder Reparaturmasse.

33. Verfahren zur Herstellung eines Formkörpers unter Verwendung eines Versatzes nach einem oder mehreren der Ansprüche 1 bis 30,
**dadurch gekennzeichnet, daß**
die feuerfeste metalloxidische Komponente klassiert wird und ein gewünschtes Kornband aus mehreren Kornfraktionen zusammengesetzt wird und anschließend die metalloxidische Komponente mit dem Harz und dem Kohlenstoffträger vermischt wird und das Graphitisierungshilfsmittel zugegeben und gemischt wird und die Mischung anschließend verpreßt und dann gehärtet wird.

34. Verfahren nach Anspruch 33,
**dadurch gekennzeichnet, daß**
der Mischung Antioxidantien zugemischt werden.

35. Verfahren nach Anspruch 33 und/oder 34,
**dadurch gekennzeichnet, daß**
das Graphitisierungshilfsmittel als mikronisierte, vorgemahlene Zubereitung aus der feuerfesten metalloxidischen Komponente und dem Graphitisierungshilfsmittel zugegeben wird, wobei die Zubereitung dadurch erzeugt wird, daß die oxidische Komponente und das Graphitisierungshilfsmittel in einer Kugelmühle gemeinsam vermahlen werden.

36. Verfahren nach einem oder mehreren der Ansprüche 33 bis 35,
**dadurch gekennzeichnet, daß**
für die zubereitung das Graphitisierungshilfsmittel und die metalloxidische Komponente im Verhältnis 1:50 gemischt und in der Kugelmühle gemeinsam gemahlen werden.

37. Verfahren nach Anspruch 36,
**dadurch gekennzeichnet, daß**
solange gemahlen wird, bis die Endkorngröße des Graphitisierungshilfsmittels zwischen einem und zehn Mikrometer liegt.

38. Verfahren nach einem oder mehreren der Ansprüche 33 bis 37,
**dadurch gekennzeichnet, daß**
das Graphitisierungshilfsmittel der Mischung als Suspension, Emulsion oder Schlicker zugegeben wird.

39. Verfahren nach einem oder mehreren der Ansprüche 33 bis 38,
**dadurch gekennzeichnet, daß**
das Graphitisierungshilfsmittel dem Harz vor dem Vermischen mit den anderen Bestandteilen zugegeben wird.

40. Verfahren nach einem oder mehreren der Ansprüche 33 bis 39,
**dadurch gekennzeichnet, daß**
zudem Stahlfasern und/oder Preßhilfsmittel und/oder weitere an sich bekannte Nebenbestandteile zugegeben werden.

41. Verfahren nach einem oder mehreren der Ansprüche 33 bis 40,
**dadurch gekennzeichnet, daß**
der fertig gemischte Versatz bei Preßdrücken bis 180 MPa verpreßt wird.

42. Verfahren nach einem oder mehreren der Ansprüche 33 bis 41,
**dadurch gekennzeichnet, daß**
die verpreßten Formkörper vier bis zehn Stunden bei 150 bis 250 Grad getrocknet und gehärtet werden.

## Claims

1. Batch, in particular for the production of a fireproof moulded part, comprising one or more fireproof metal-oxide components, plus one or more carbon substrates, together with a synthetic resin component as binder and a graphitisation agent to obtain crystalline graphitic carbon from the resin, wherein the graphitisation agent is from the group of reducible organic compounds of the transition elements and/or the group of active organic or inorganic metal compounds or metals, such as metal salts soluble in resin, chemically precipitated or micronised metal oxides or metals, wherein the graphitisation agent is available in molecular form in the time and/or temperature interval of the conversion of the synthetic resin to carbon (carbonisation).

2. Batch according to claim 1,
**characterised in that**
the graphitisation agent contains, as easily reducible organic compounds of the transition elements, metalocene and/or metal benzoate and/or metal octotate and/or metal naphthenate and/or other organic metal compounds.

3. Batch according to claim 1 and/or 2,
**characterised in that**
the organic compounds are compounds of the metals copper and/or chromium and/or iron and/or nickel and/or cobalt and/or platinum and/or rhodium and/or germanium and/or other similar metals.

4. Batch according to one or more of the preceding claims,
**characterised in that**
it contains ferrocene as graphitisation agent.

5. Batch according to one or more of the preceding claims,
**characterised in that**
the graphitisation agent contains inorganic metal compounds such as metal salts soluble in resin or chemically precipitated, or micronised metal oxides or metals.

6. Batch according to one or more of the preceding claims,
**characterised in that**
the graphitisation agent contains as inorganic metal compounds, compounds of copper and/or chromium and/or iron and/or nickel and/or cobalt and/or platinum and/or rhodium and/or germanium and/or similar metals, or these metals in metallic form.

7. Batch according to one or more of the preceding claims,
**characterised in that**
the graphitisation agent contains red haematite pigment.

8. Batch according to one or more of the preceding claims,
**characterised in that**
the fireproof metal-oxide component contains substantially MgO.

9. Batch according to claim 8,
**characterised in that**
the fireproof metal-oxide component is a natural or synthetic MgO sinter of high purity.

10. Batch according to one or more of claims 1 to 7,
**characterised in that**
the fireproof metal-oxide component contains substantially dolomite.

11. Batch according to claim 10, **characterised in that**
the fireproof metal-oxide component is a natural or synthetic dolomite sinter.

12. Batch according to one ormore of claims 1 to 7,
**characterised in that**
the fireproof metal-oxide component is Al₂O₃.

13. Batch according to claim 12,
**characterised in that**
the fireproof metal-oxide component is tabular clay.

14. Batch according to one or more of the preceding claims,
**characterised in that**
the synthetic resin component contains a single-component resin.

15. Batch according to any of claims 1 to 14,
**characterised in that**
the synthetic resin component contains a two-component resin.

16. Batch according to claims 1 to 15,
**characterised in that**
the batch contains antioxidants.

17. Batch according to claim 16,
**characterised in that**
the antioxidants are metallic antioxidants.

18. Batch according to claim 16 or 17,
**characterised in that**
the metallic antioxidants are silicon and/or aluminium and/or magnesium.

19. Batch according to one or more of the preceding claims,
**characterised in that**
the fireproof metal-oxide component has a grain size of 0 to 10 mm.

20. Batch according to one or more of the preceding claims,
**characterised in that**
the fireproof metal-oxide component has a grain size distribution of 0 to 15 mm.

21. Batch according to one or more of the preceding claims,
**characterised in that**
the content of the fireproof metal-oxide component in the batch lies between 70 % by mass and 98 % by mass.

22. Batch according to one or more of the preceding claims,
**characterised in that**
the binder component is a phenol resin and/or resol resin and/or a novolak resin.

23. Batch according to one or more of the preceding claims,
**characterised in that**
the quantity of synthetic resin contained is 1% to 5 % by mass.

24. Batch according to one or more of the preceding claims,
**characterised in that**
the quantity of carbon substrate contained is 0.5 to 30% by mass.

25. Batch according to one or more of the preceding claims,
**characterised in that**
the quantity of metallic antioxidants contained is 0.5 to 10% by mass.

26. Batch according to one or more of the preceding claims,
**characterised in that**
the graphitisation agent content is 0.1 to 10% by weight based on the resin.

27. Batch according to claim 26,
**characterised in that**
the graphitisation agent content is 0.5 to 5% by weight based on the resin.

28. Batch according to claim 26 and/or 27,
**characterised in that**
the graphitisation agent content is 0.7 to 1.4% by weight based on the resin.

29. Batch according to one or more of the preceding claims,
**characterised in that**
it contains fibres.

30. Batch according to claim 29,
**characterised in that**
it contains steel fibres.

31. Use of a batch according to one or more of claims 1 to 30 to produce moulded parts.

32. Use of a batch according to one or more of claims 1 to 30 as spray and/or stamping and/or ramming and/or repair material.

33. Method of producing a moulded part using a batch according to one or more of claims 1 to 30,
**characterised in that**
the fireproof metal-oxide component is graded and a desired grain size band of several grain size fractions is assembled and the metal-oxide component is then mixed with the resin and the carbon substrate, the graphitisation agent is added and mixed, and the mixture is then press-moulded and cured.

34. Method according to claim 33,
**characterised in that**
antioxidants are added to the mixture.

35. Method according to claim 33 and/or 34,
**characterised in that**
the graphitisation agent is added as a micronised, pre-ground preparation from the fireproof metal-oxide component and the graphitisation agent, wherein the preparation is produced by grinding together of the oxidic component and the graphitisation agent in a ball mill.

36. Method according to one or more of claims 33 to 35,
**characterised in that**
for the preparation, the graphitisation agent and the metal-oxide component are mixed in a ratio of 1:50 and ground together in the ball mill.

37. Method according to claim 36
**characterised in that**
grinding continues until the final grain size of the graphitisation agent lies between one and ten micrometers.

38. Method according to one or more of claims 33 to 37,
**characterised in that**
the graphitisation agent is added to the mixture as a suspension, an emulsion or a slip.

39. Method according to one or more of claims 33 to 38,
**characterised in that**
the graphitisation agent is added to the resin before mixing with the other constituents.

40. Method according to one or more of claims 33 to 39,
**characterised in that**
steel fibres and/or press-moulding aids and/or other essentially known accessories are al so added.

41. Method according to one or more of claims 33 to 40,
**characterised in that**
the ready-mixed batch is press-moulded at moulding pressures up to 180 MPa.

42. Method according to one or more of claims 33 to 41,
**characterised in that**
the press-moulded part is dried and cured for four to ten hours at 150 to 250 degrees.

## Revendications

1. Composition, en particulier pour la fabrication d'un corps moulé réfractaire, comprenant au moins un composant oxyde métallique réfractaire, ainsi qu'au moins un support de carbone ainsi qu'un composant résine synthétique comme liant et un adjuvant de graphitisation pour la production de carbone sous forme de graphite cristallin à partir de la résine, l'adjuvant de graphitisation provenant du groupe des composés organiques réductibles des éléments de transition et/ou du groupe des composés métalliques actifs organiques ou inorganiques ou des métaux, tels que les sels métalliques solubles dans la résine, les oxydes métalliques ou les métaux précipités chimiquement ou micronisés, l'adjuvant de graphitisation étant à disposition sous forme moléculaire pendant l'intervalle de temps et/ou de température de la transformation de la résine synthétique en carbone (cokéfaction).

2. Composition selon la revendication 1, **caractérisée en ce que** l'adjuvant de graphitisation contient en tant que composés organiques facilement réductibles des éléments de transition des métallocènes et/ou des benzoates métalliques et/ou des octoates métalliques et/ou des naphténates métalliques et/ou d'autres composés métalliques organiques.

3. Composition selon la revendication 1 et/ou 2, **caractérisée en ce que** les composés organiques sont des composés des métaux cuivre et/ou chrome et/ou fer et/ou nickel et/ou cobalt et/ou platine et/ou rhodium et/ou germanium et/ou d'autres métaux analogues.

4. Composition selon l'une ou plusieurs des revendications précédentes, **caractérisée en ce qu'**elle contient du ferrocène en tant qu'adjuvant de graphitisation.

5. Composition selon l'une ou plusieurs des revendications précédentes, **caractérisée en ce que** l'adjuvant de graphitisation contient des composés métalliques inorganiques, tels que des sels métalliques solubles dans la résine ou des oxydes métalliques ou des métaux précipités chimiquement ou micronisés.

6. Composition selon l'une ou plusieurs des revendications précédentes, **caractérisée en ce que** l'adjuvant de graphitisation contient en tant que composés métalliques inorganiques des composés du cuivre et/ou du chrome et/ou du fer et/ou du nickel et/ou du cobalt et/ou du platine et/ou du rhodium et/ou du germanium et/ou de métaux analogues ou contient ces métaux sous forme métallique.

7. Composition selon l'une ou plusieurs des revendications précédentes, **caractérisée en ce que** l'adjuvant de graphitisation contient du pigment hermatite rouge.

8. Composition selon l'une ou plusieurs des revendications précédentes, **caractérisée en ce que** le composé oxyde métallique réfractaire présente essentiellement du MgO.

9. Composition selon la revendication 8, **caractérisée en ce que** le composé oxyde métallique réfractaire est un MgO fritté de haute pureté, naturel ou synthétique.

10. Composition selon l'une ou plusieurs des revendications 1 à 7, **caractérisée en ce que** le composant oxyde métallique réfractaire présente essentiellement de la dolomite.

11. Composition selon la revendication 10, **caractérisée en ce que** le composant oxyde métallique réfractaire est une dolomite frittée naturelle ou synthétique.

12. Composition selon l'une ou plusieurs des revendications 1 à 7, **caractérisée en ce que** le composé oxyde métallique réfractaire est du Al₂O₃.

13. Composition selon la revendication 12, **caractérisée en ce que** le composant oxyde métallique réfractaire est de l'alumine tabulaire.

14. Composition selon l'une ou plusieurs des revendications précédentes, **caractérisée en ce que** le composant résine synthétique présente une résine synthétique à un seul composant.

15. Composition selon l'une quelconque des revendications 1 à 14, **caractérisée en ce que** le composant résine synthétique présente une résine synthétique à deux composants.

16. Composition selon l'une quelconque des revendications 1 à 15, **caractérisée en ce que** la composition contient des antioxydants.

17. Composition selon la revendication 16, **caractérisée en ce que** les antioxydants sont des antioxydants métalliques.

18. Composition selon la revendication 16 ou 17, **caractérisée en ce que** les antioxydants métalliques sont le silicium et/ou l'aluminium et/ou le magnésium.

19. Composition selon l'une ou plusieurs des revendications précédentes, **caractérisée en ce que** le composant oxyde métallique réfractaire présente une granulométrie de 0 à 10 mm.

20. Composition selon l'une ou plusieurs des revendications précédentes, **caractérisée en ce que** le composant oxyde métallique réfractaire présente une répartition granulométrique de 0 à 15 mm.

21. Composition selon l'une ou plusieurs des revendications précédentes, **caractérisée en ce que** la teneur en composant oxyde métallique réfractaire dans la composition est située entre 70% en mole et 98% en mole.

22. Composition selon l'une ou plusieurs des revendications précédentes, **caractérisée en ce que** le composant liant est une résine phénolique et/ou une résine résol et/ou une résine novolaque.

23. Composition selon l'une ou plusieurs des revendications précédentes, **caractérisée en ce que** la résine synthétique est contenue en une quantité de 1 à 5% en mole.

24. Composition selon l'une ou plusieurs des revendications précédentes, **caractérisée en ce que** le support de carbone est contenu en une quantité de 0,5% en mole à 30% en mole.

25. Composition selon l'une ou plusieurs des revendications précédentes, **caractérisée en ce que** les antioxydants métalliques sont contenus en une quantité de 0,5 à 10%.

26. Composition selon l'une ou plusieurs des revendications précédentes, **caractérisée en ce que** l'adjuvant de graphitisation est contenu en des teneurs de 0,1 à 10% en poids par rapport à la résine.

27. Composition selon la revendication 26, **caractérisée en ce que** l'adjuvant de graphitisation est contenu en des teneurs de 0,5 à 5% en poids par rapport à la résine.

28. Composition selon la revendication 26 et/ou 27, **caractérisée en ce que** l'adjuvant de graphitisation est contenu en des teneurs de 0,7 à 1,4% en poids par rapport à la résine.

29. Composition selon l'une ou plusieurs des revendications précédentes, **caractérisée en ce que** des fibres sont contenues.

30. Composition selon la revendication 29, **caractérisée en ce que** des fibres d'acier sont contenues.

31. Utilisation d'une composition selon l'une ou plusieurs des revendications 1 à 30 pour la préparation de corps moulés.

32. Utilisation d'une composition selon l'une ou plusieurs des revendications 1 à 30 comme masse à pulvériser et/ou à fouler et/ou à damer et/ou de réparation.

33. Procédé pour la préparation d'un corps moulé avec utilisation d'une composition selon l'une ou plusieurs des revendications 1 à 30, **caractérisé en ce que** le composant oxyde métallique réfractaire est trié et une bande granulométrique souhaitée est réalisée à partir de plusieurs fractions granulométriques et le composant oxyde métallique est ensuite mélangé avec la résine et le support de carbone et l'adjuvant de graphitisation est ajouté et mélangé, puis le mélange est comprimé et ensuite durci.

34. Procédé selon la revendication 33, **caractérisé en ce que** des antioxydants sont introduits dans le mélange.

35. Procédé selon la revendication 33 et/ou 34, **caractérisé en ce que** l'adjuvant de graphitisation est ajouté sous forme d'une composition micronisée, broyée au préalable du composant oxyde métallique réfractaire et de l'adjuvant de graphitisation, la composition étant obtenue **en ce que** le composant oxyde et l'adjuvant de graphitisation sont broyés ensemble dans un broyeur à billes.

36. Procédé selon l'une ou plusieurs des revendications 33 à 35, **caractérisé en ce que**, pour la composition, l'adjuvant de graphitisation et le composant oxyde métallique sont mélangés dans un rapport 1:50 et sont broyés ensemble dans le broyeur à billes.

37. Procédé selon la revendication 36, **caractérisé en ce qu'**on broie jusqu'à ce que la granulométrique finale de l'adjuvant de graphitisation soit située entre un et dix micromètres.

38. Procédé selon l'une ou plusieurs des revendications 33 à 37, **caractérisé en ce que** l'adjuvant de graphitisation est ajouté au mélange sous forme d'une suspension, d'une émulsion ou d'une barbotine.

39. Procédé selon l'une ou plusieurs des revendications 33 à 38, **caractérisé en ce que** l'adjuvant de graphitisation est ajouté à la résine avant le mélange avec les autres constituants.

40. Procédé selon l'une ou plusieurs des revendications 33 à 39, **caractérisé en ce que** des fibres d'acier et/ou des adjuvants de compression et/ou d'autres constituants secondaires connus en soi sont en outre ajoutés.

41. Procédé selon l'une ou plusieurs des revendications 33 à 40, **caractérisé en ce que** la composition mélangée finie est comprimée à des pressions allant jusqu'à 180 MPa.

42. Procédé selon l'une ou plusieurs des revendications 33 à 41, **caractérisé en ce que** les corps moulés comprimés sont séchés et durcis pendant quatre à dix heures à 150 jusqu'à 250 degrés.
